Europäisches Patentamt

European Patent Office

Office européen des brevets

(19)

(11) **EP 1 220 087 A1**

(12) **EUROPÄISCHE PATENTANMELDUNG**

(43) Veröffentlichungstag:
**03.07.2002 Patentblatt 2002/27**

(51) Int Cl.$^7$: **G06F 7/544**, H04N 7/50,
H04N 7/36

(21) Anmeldenummer: **00128652.5**

(22) Anmeldetag: **28.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder: **Schaefer, Joerg**
**81369 München (DE)**

(54) **Schaltungsanordnung zum Ausführen einer Multiplikation und/oder einer Filteroperation, mit konstanten ganzzahligen Werten**

(57) Erläutert wird unter anderem eine Schaltungsanordnung (10), die eine Addiereinheit (32), zwei Multiplexer (MUXA und MUXB) sowie mehrere Verschiebeeinheiten (16 bis 20) enthält. Mit der Schaltungsanordnung (10) lassen sich durch unterschiedliche Ansteuerung der Multiplexeinheiten (MUXA und MUXB) mit Hilfe einer Steuereinheit Multiplikationen mit verschiedenen Faktoren auf eine einfache und schnelle Art ausführen.

FIG 1

EP 1 220 087 A1

**Beschreibung**

Schaltungsanordnung zum Ausführen einer Multiplikation und/oder einer Filteroperation, zugehörige Einheiten und zugehöriges Programm

Die Erfindung betrifft eine Schaltungsanordnung, die eine Verschiebeeinheit enthält. Die Verschiebeeinheit ist mit einem Eingangsbussystem verbunden. Die auf dem Eingangsbussystem anliegenden Daten werden durch die Verschiebeeinheit unter Beibehaltung der Bitfolge und der Datenwerte auf einem Ausgangsbussystem mit einer von der Zuordnung der Daten des Eingangsbussystems zu Potenzen einer Basis verschiedenen Zuordnung der Daten zu den Potenzen der Basis ausgegeben.

Als Verschiebeeinheit wird bisher beispielsweise ein Schieberegister, eine Schiebelogik oder ein Prozessor eingesetzt. Ein Schieberegister ist eine Kette von sogenannten FlipFlops, d.h. von bistabilen Kippschaltungen, die es ermöglichen, eine am Eingang angelegte Information mit jedem Takt um ein Flip-Flop weiterzuschieben. Nach dem Durchlaufen der Kette steht das Eingangsdatum am Ausgang verzögert, aber sonst unverändert zur Verfügung. Die Schiebelogik ist auch unter dem Namen "Barrelshifter" bekannt. Im Gegensatz zu einem Schieberegister benötigt eine Schiebelogik keine getaktete Ablaufsteuerung, weil ein Schaltnetz mit Multiplexern eingesetzt wird, siehe "Halbleiterschaltungstechnik", U. Tietze, Ch. Schenk, Springer, 10. Auflage, Seiten 601 bis 603. Bei einem Prozessor gibt es Verschiebebefehle, mit deren Hilfe Datenworte um eine bestimmte Anzahl von Bitstellen nach rechts oder nach links verschoben werden können.

Die Verschiebeeinheiten werden eingesetzt, um Multiplikationen oder Divisionen mit bzw. durch Potenzen einer Basis auf einfache Art auszuführen. Üblicherweise wird als Basis der Wert 2 gewählt. Damit lassen sich Multiplikationen mit dem Faktor 2, 4, 8, 16 usw. auf einfache Art ausführen. Auch Divisionen durch den Divisor 2, 4, 8, 16 usw. lassen sich auf einfache Art durchführen.

Soll dagegen beispielsweise eine Multiplikation mit einem Faktorausgeführt werden, der von einer Potenz der Basis verschieden ist, werden aufwendige Rechenwerke benötigt, siehe beispielsweise "Halbleiterschaltungstechnik", U. Tietze, Ch. Schenk, Springer, 10. Auflage, Seiten 613 bis 617.

Es ist Aufgabe der Erfindung, zum Ausführen einer Multiplikation und/oder einer Filteroperation insbesondere mit einem Faktor, der keine Potenz der verwendeten Basis ist, eine einfach aufgebaute Schaltungsanordnung anzugeben, die insbesondere eine schnelle Multiplikation ermöglicht. Außerdem sollen eine zugehörige Verwendung der Schaltungsanordnung, ein zugehöriges Bildtelefon, eine zugehörige Verschiebeeinheit, eine zugehörige Steuereinheit und ein zugehöriges Programm angegeben werden.

Die auf die Schaltungsanordnung bezogene Aufgabe wird durch eine Schaltungsanordnung mit den im Patentanspruch 1 angegebenen Merkmalen gelöst. Weiterbildungen sind in den Unteransprüchen angegeben.

Die Erfindung geht von der Überlegung aus, dass die Multiplikation des Faktors, der keine Potenz der Basis ist, dann besonders einfach ist, wenn die Multiplikation bezogen auf diesen Faktor in Teilschritte zerlegt wird. Der Faktor wird gemäß den Potenzen der Basis zerlegt. Für jeden dabei entstehenden Wert wird eine Verschiebeoperation mit einer Verschiebeeinheit ausgeführt. Die Ergebnisse der Verschiebeoperationen werden dann addiert. Der Aufwand für eine Ablaufsteuerung lässt sich verringern, wenn nur Verschiebeeinheiten eingesetzt werden, die um eine feste Anzahl von Bitstellen verschieben, ohne dass der Wert durch eine Ablaufsteuerung beeinflusst werden kann. Um dennoch verschiedene Faktoren bzw. Divisoren auswählen zu können, werden Multiplexer eingesetzt.

Die Ablaufsteuerung muss dann nur noch die Multiplexer ansteuern.

Die erfindungsgemäße Schaltungsanordnung enthält zusätzlich zu der eingangs erwähnten Verschiebeeinheit deshalb eine Addiereinheit, die über mindestens zwei Summanden-Bussysteme übertragene Daten addiert. Weiterhin enthält die Schaltungsanordnung mindestens eine Multiplexeinheit, die wahlweise eine von mindestens zwei ihrer Eingangsanschlussgruppen mit ihren Ausgangsanschlüssen verbindet. Die Ausgangsanschlüsse der Multiplexeinheit sind mit dem einem Summanden-Bussystem verbunden. Weiterhin enthält die Schaltungsanordnung eine Verbindung des Ausgangsbussystems der Verschiebeeinheit mit einer Gruppe von Eingangsanschlüssen der Multiplexeinheit. Es besteht außerdem eine direkte Verbindung von Eingangsbussystem und einer anderen Eingangsanschlussgruppe der Multiplexeinheit. Alternativ besteht zwischen dem Eingangsbussystem und der anderen Eingangsanschlussgruppe der Multiplexeinheit eine indirekte Verbindung unter Zwischenschaltung einer weiteren Verschiebeeinheit. Eine Steuereinheit steuert die Multiplexeinheiten gemäß einem benötigten Faktor an.

Bereits mit einer Schaltungsanordnung, die nur einen Multiplexer und nur eine Verschiebeeinheit enthält, lassen sich Multiplikationen mit zwei verschiedenen Faktoren bzw. Divisionen durch zwei verschiedenen Divisoren bzw. eine Multiplikation und eine Division ausführen. Durch Beschalten weiterer Eingangsanschlussgruppen der Multiplexer können auf einfache Art weitere Faktor- bzw. Divisorwerte einbezogen werden.

Bei einer Weiterbildung der erfindungsgemäßen Schaltungsanordnung enthält die Schaltungsanordnung mindestens eine weitere von der Steuereinheit gesteuerte Multiplexeinheit, deren Ausgangsanschlüsse mit dem anderen Summanden-Bussystem verbunden sind. Die Schaltungsanordnung enthält mindestens eine weitere eingangsseitig mit dem Eingangsbussystem verbundene Verschiebeeinheit, deren Ausgangsbussystem mit einer Gruppe von Eingangsanschlüssen der weiteren Multiplexeinheit verbunden sind. Durch das Verwenden zweier Multiplexeinheiten entstehen Freiheitsgrade, die es erlauben die Multiplikation auf verschiedene Arten auszuführen, z.B. wahlweise über die eine Multiplexeinheit oder die andere Multiplexeinheit. Die Auswahl wird so getroffen, dass durch die Schaltungsanordnung noch andere Funktionen erbracht werden.

Bei einer nächsten Weiterbildung der Schaltungsanordnung sind in der Verschiebeeinheit die Leitungen des Eingangsbussystems mit Leitungen des Ausgangsbussystems direkt verbunden. An mindestens eine Leitung des Ausgangsbussystems wird in der Verschiebeeinheit ein vorgegebenes Potential angelegt. Damit lässt sich eine Verschiebeoperation nach links und damit eine Multiplikation mit einer Potenz der Basis 2 auf eine einfache Art im Vergleich zu den bekannten Verschiebeeinheiten ausführen. Es sind in der Verschiebeeinheit weder Speicherelemente noch Multiplexer erforderlich. Trotzdem kommt es zu der Verschiebung der Zuordnung zu den Potenzen der Basis. Die Verschiebeeinheit hat bei der Weiterbildung vorzugsweise ein Ausgangsbussystem mit einer größeren Busbreite als das Eingangsbussystem.

Bei einer nächsten Weiterbildung ist das vorgegebene Potential ein Potential mit einem Wert, der zu einer zusätzlichen Addition führt. Durch diese Maßnahme lassen sich auf einfache Art bei der Multiplikation gleichzeitig bestimmte Werte addieren ohne die zur Zusammenstellung des Faktors benötigte Addiereinheit oder eine zusätzliche Addiereinheit verwenden zu müssen, die ein Rechenwerk enthält. Dies erleichtert es, bestimmte Formeln schaltungstechnisch umzusetzen.

Bei einer alternativen Weiterbildung wird in der Verschiebeeinheit ein Teil der Leitungen des Eingangsbussystems der Verschiebeeinheit mit Leitungen des Ausgangsbussystems der Verschiebeeinheit direkt verbunden. Mindestens eine Leitung des Eingangsbussystems wird nicht durch die Verschiebeeinheit geführt. Beispielsweise endet diese Leitung in der Verschiebeeinheit. Vorzugsweise ist die Busbreite des Ausgangsbussystems der Verschiebeeinheit kleiner als die Busbreite des Eingangsbussystems. Die Verschiebeeinheit führt eine Verschiebung der Daten zu kleineren Potenzen der Basis hin aus. Eine solche Verschiebung ist auch unter dem Namen Rechtsverschiebung bekannt. Wie bereits erwähnt, führt die Rechtsverschiebung zu einer ganzzahligen Division durch eine Potenz der Basis. Die alternative Weiterbildung gibt eine im Vergleich zu bekannten Verschiebeeinheiten einfacher aufgebaute Verschiebeeinheit an.

Bei einer nächsten Weiterbildung enthält die Schaltungsanordnung eine der Addiereinheit nachgeschaltete Speichereinheit, die eine durch die Addiereinheit berechnete Summe speichert. Ein Rückkoppel-Bussystem führt von den Ausgangsanschlüssen der Speichereinheit zu einer Eingangsanschlussgruppe einer Multiplexeinheit oder zu dem anderen Summanden-Bussystem. Durch diese Maßnahme lässt sich das Ergebnis eines Schrittes, der mit der Schaltungsanordnung ausgeführt worden ist, beim nächsten Schritt, der mit der Schaltungsanordnung ausgeführt wird, berücksichtigen. Formeln mit mehreren Termen lassen sich so durch mehrfache Nutzung derselben Schaltungsanordnung berechnet werden. Es ist nicht erforderlich, mehrere erfindungsgemäße Schaltungsanordnungen in Reihe zu schalten. Durch die Weiterbildung sinkt der schaltungstechnische Aufwand erheblich.

Die Erfindung betrifft außerdem eine Verwendung der erfindungsgemäßen Schaltungsanordnung oder einer ihrer Weiterbildungen zum Ausführen einer Filteroperation für das Bearbeiten von Bilddaten. Beispiele für solche Filteroperationen sind Glättungsfilter, Kantendetektionsfilter oder sogenannte Wienerfilter zur Bildrestauration. Den Filteroperationen ist gemeinsam, dass bestimmte Bildelemente mit vorgegebenen Faktoren multipliziert werden müssen. Die Werte der Faktoren bestimmen die letztlich ausgeführte Filteroperation. Insbesondere eignet sich die Schaltungsanordnung zum Ausführen einer Filteroperation im Rahmen einer sogenannten "Overlapped Block Motion Compensation", kurz OBMC, wie sie im Standard H.263 der ITU-T (International Telecommunication Union - Telecommunication Standardization Sector), Anhang F, festgelegt ist. Die im Anhang F des genannten Standards festgelegte Filteroperation ist ausgesprochen rechenintensiv. Die zur Verfügung stehende Rechenzeit ist außerdem beschränkt, da auch größere Bilder, z.B. im CIF (Common Interface Format) oder QCIF (Quater CIF), in Echtzeit, d.h. z.B. 25 oder 50 Bilder pro Sekunde, bearbeitet werden müssen. Erst durch den Einsatz der Schaltungsanordnung gemäß dem erfindungsgemäßem Verfahren oder einer seiner Weiterbildungen lässt sich die Filteroperation mit einem schaltungstechnischen Aufwand ausführen, der auch bei Massenprodukten vertretbar ist.

Die Erfindung betrifft außerdem ein Bildtelefon, das die erfindungsgemäße Schaltungsanordnung oder eine ihrer Weiterbildungen enthält. Die bei der Verwendung der Schaltungsanordnung geltenden technischen Wirkungen gelten auch für das Bildtelefon.

Die Erfindung betrifft außerdem eine Verschiebeeinheit mit den im Patentanspruch 9 angegebenen Merkmalen. Diese Merkmale entsprechen den Merkmalen der oben als Weiterbildung genannten Verschiebeeinheiten. Somit gelten die oben genannten technischen Wirkungen auch für die erfindungsgemäße Verschiebeeinheit. Insbesondere hat die Verschiebeeinheit im Vergleich zu bekannten Verschiebeeinheiten einen einfacheren Aufbau und ermöglicht das Ausführen der Verschiebeoperationen ohne nennenswerte Verzögerung in kurzer Zeit.

Die Erfindung betrifft außerdem eine Steuereinheit, die so aufgebaut ist, dass bei ihrem Betrieb die Multiplexeinheit oder die Multiplexeinheiten der erfindungsgemäßen Schaltungsanordnung oder einer ihrer Weiterbildungen angesteuert wird bzw. werden. Die Steuereinheit lässt sich unter Verwendung eines Prozessors oder als Ablaufsteuerung ohne Prozessor aufbauen. Weiterhin ist ein Programm betroffen, das insbesondere in dieser Steuereinheit eingesetzt wird. Das Programm enthält eine Befehlsfolge, bei deren Ausführung durch einen Prozessor die Multiplexeinheit bzw. die Multiplexeinheiten der erfindungsgemäßen Schaltungsanordnung oder einer ihrer Weiterbildungen angesteuert werden. Die oben genannten technischen Wirkungen gelten auch für die Steuereinheit und das Programm.

Im folgenden werden Ausführungsbeispiele der Erfindung an Hand der beiliegenden Zeichnungen erläutert. Darin zeigen:

Figur 1 eine Schaltungsanordnung zum Ausführen einer Filteroperation gemäß Standard H.263, Anhang F,

Figur 2 eine Verschiebeeinheit für eine einfache Linksverschiebung (Multiplikation),

Figur 3 eine Verschiebeeinheit für eine zweifache Linksverschiebung (Multiplikation) und gleichzeitige Addition,

Figur 4 eine Verschiebeeinheit für eine dreifache Rechtsverschiebung (Division), und

Figuren 5A Verfahrensschritte beim Betrieb der Schaltungsanordnung.

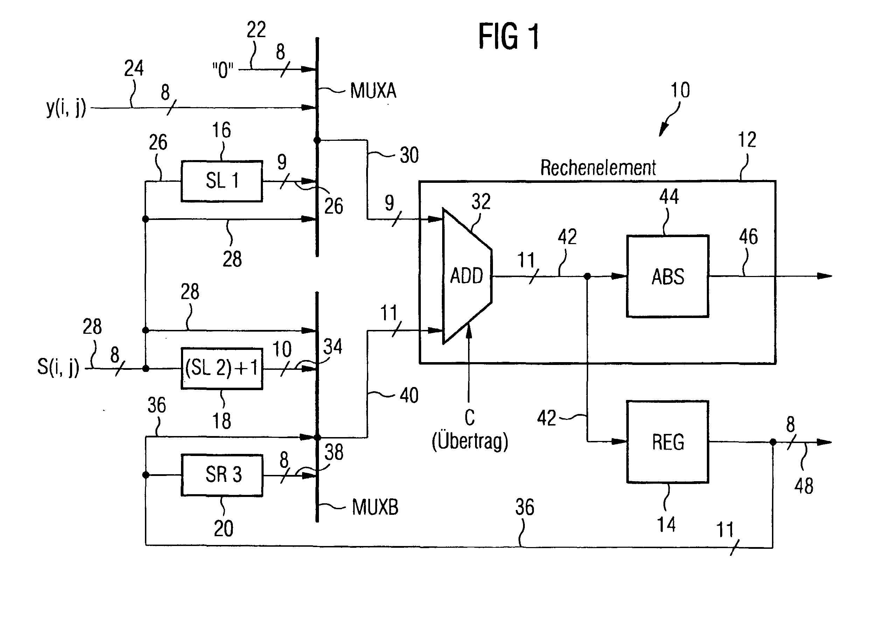

Figur 1 zeigt eine Schaltungsanordnung 10 zum Ausführen einer Filteroperation gemäß Standard H.263, Anhang F:

$$P(x,y) = (q(x,y) \cdot H0(i,j) + r(x,y) \cdot H1(i,j) + s(x,y) \cdot H2(i,j) + 4)/8 \tag{1}$$

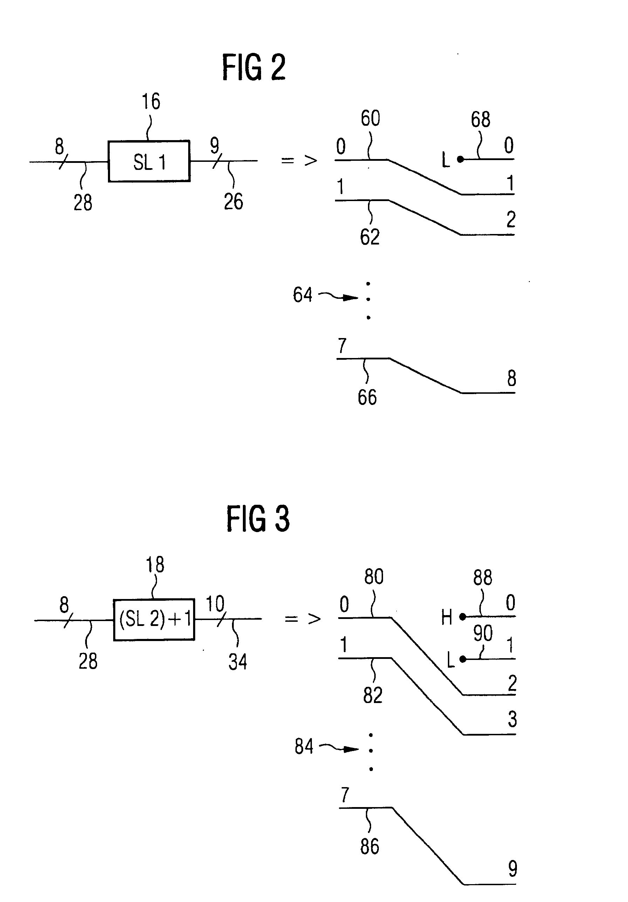

wobei die Größen die im Standard H.263, Anhang F, angegebenen Bedeutungen haben. Insbesondere sind q(x,y), r(x,y) und s(x,y) Werte, die aus dem zuletzt decodierten Bild abhängig von drei Bewegungsvektoren entnommen werden. Die Größen H0, H1 und H2 sind Matrizen, deren Elemente die im Standard H.263, Anhangs F, Figuren 2, 3 und 4, angegebenen Werte haben. In den Matrizen treten nur die Faktoren 1, 2, 4, 5 und 6 auf. Bezogen auf eine Bitposition ist die Summe der Faktoren der Matrizen H0, H1 und H2 immer 8. Dies erklärt auch die ganzzahlige Division durch den Faktor 8 gemäß Formel (1). Die Addition mit dem Wert 4 bewirkt im Zusammenhang mit der ganzzahligen Division eine Rundung auf ganzzahlige Werte.

Die Formel (1) lässt sich auch anders darstellen:

$$P(x,y) = (4 + \sum_{m=0}^{2} Hm(i,j) \cdot qm(x',y'))/8 \qquad (2),$$

wobei die Größen P(x,y) sowie H0 bis H2 die gleiche Bedeutung haben, wie die gleichnamigen Größen in der Formel (1). Die Größen q0, q1 und q2 entsprechen in dieser Reihenfolge den Größen q, r und s gemäß Formel (1). Die Größen x' und y' berücksichtigen bereits die Bewegungsvektoren. Der Kleinbuchstabe m ist eine Laufvariable, die nacheinander die Werte 0, 1 und 2 durchläuft. Beim Wert 0 wird ein Bewegungsvektor bezüglich eines entsprechenden Blockes einbezogen, der im Originalbild an der gleichen Stelle liegt, wie der Bezugsblock im zu decodierenden Bild. Bezugspunkt ist beispielsweise die linke obere Ecke der Bilder. Gemäß der zu verwendenden Matrix H0 treten nur die Faktoren 4, 5 und 6 auf. Beim Wert m = 1 oder beim Wert m = 2 sind Bewegungsvektoren für dem entsprechenden Block benachbarte Blöcke einzubeziehen. In den zu verwendenden dann zu verwendenden Matrizen treten nur die Werte 1 und 2 auf.

Die Schaltungsanordnung 10 enthält zwei Multiplexer MUXA, MUXB, ein Rechenelement 12, ein Register 14, drei Verschiebeeinheiten 16, 18, 20 sowie mehrere Bussysteme. Die Verschaltung dieser Einheiten wird im Folgenden erläutert.

Der Multiplexer MUXA hat vier Eingangsanschlussgruppen, an die ein Null-Bussystem 22, ein Eingangs-Bussystem 24, ein Ausgangs-Bussystem 26 der Verschiebeeinheit 16 bzw. ein Eingangs-Bussystem 28 geführt werden. Das Null-Bussystem 22, das Eingangs-Bussystem 24 und das Eingangs-Bussystem 28 haben eine Busbreite von 8 Datenleitungen. Die Busbreite des Ausgangs-Bussystems 26 beträgt 9 Bit.

Die Ausgangsanschlüsse des Multiplexers MUXA sind mit einem Summanden-Bussystem 30 verbunden, das zu einer Addiereinheit 32 führt, die in dem Rechenelement 12 enthalten ist. Das Summanden-Bussystem 30 dient zur Eingabe des einen Summanden in die Addiereinheit 32 und hat eine Busbreite von 9 Datenleitungen.

Eine in Figur 1 nicht dargestellte Steuereinheit zum Ansteuern des Multiplexers MUXA wählt eine der Eingangsanschlussgruppen des Multiplexers MUXA und damit eines der Bussysteme 22 bis 28 aus und verbindet dessen Datenleitungen mit den Datenleitungen des Summanden-Bussystems 30. Wird eines der Bussysteme 22, 24 oder 28 gewählt, so wird die Datenleitung zur Übertragung der höchstwertigen Bitposition auf dem Summanden-Bussystem 30 auf den Wert 0 gesetzt.

Der Multiplexer MUXB hat vier Eingangsanschlussgruppen, die mit dem Eingangs-Bussystem 28, mit einem Ausgangs-Bussystem 34 der Verschiebeeinheit 18, mit einem Rückkoppel-Bussystem 36 bzw. mit einem Ausgangs-Bussystem 38 der Verschiebeeinheit 20 verbunden sind. Die Bussysteme 28, 34, 36 und 38 haben in dieser Reihenfolge Busbreiten mit 8, 10, 11 und 8 Datenleitungen. Die nicht dargestellte Steuereinheit steuert auch den Multiplexer MUXB an, um eine Eingangsanschlussgruppe des Multiplexers MUXB und damit eines der Bussysteme 28, 34, 36 bzw. 38 auszuwählen. Die Datenleitungen des ausgewählten Bussystems 28, 34, 36 bzw. 38 werden mit den Datenleitungen eines Summanden-Bussystems 40 verbunden, das von den Ausgangsanschlüssen des Multiplexers MUXB zu den Anschlüssen der Addiereinheit 32 führt, die zur Eingabe des zweiten Summanden dienen. Das Summanden-Bussystem 40 hat eine Busbreite von 11 Datenleitungen. Werden die Bussysteme 28 oder 38 mit Hilfe des Multiplexers MUXB ausgewählt, so werden die Datenleitungen für die drei höchstwertigen Bitpositionen des Summanden-Bussystems mit dem Wert 0 belegt. Wird das Bussystem 34 ausgewählt, so wird die Datenleitung für die Übertragung des höchstwertigen Bits mit dem Wert logisch Null belegt. Wird dagegen das Bussystem 36 ausgewählt, so werden alle Bitposition durch den Multiplexer MUXB übertragen.

Die Addiereinheit 32 enthält einen Eingangsanschluss C zur Eingabe eines Übertragsbits, das bei der in der Addiereinheit 32 auszuführenden Addition berücksichtigt wird. Der Wert des Übertragsbits wird durch die nicht dargestellte Steuereinheit vorgegeben. Ein Ausgangs-Bussystem 42 der Addiereinheit 32 mit 11 Datenleitungen führt zu einer im Rechenelement 12 enthaltenen Betragseinheit 44 sowie zum Eingang des Registers 14. Die Betragseinheit 44 dient zur Berechnung des absoluten Betrages für die über das Ausgangs-Bussystem eingegebenen Daten. Das Ergebnis der Betragsberechnung wird auf ein Ergebnis-Bussystem 46 ausgegeben. Das Register 14 dient zur Speicherung der auf dem Ausgabe-Bussystem 42 anliegenden Daten abhängig von einem Signal an einem nicht dargestellten Übernahme-Steuereingang, der von der nicht dargestellten Speichereinheit gesteuert wird. Die im Register 14 gespeicherten Daten werden auf dem Rückkoppel-Bussystem 36 ausgegeben. Vom Rückkoppel-Bussystem 36 verzweigt ein Ergebnis-Bussystem 48 mit einer Bitbreite von 8 Datenleitungen, die den Datenleitungen zur Übertragung der niederwertigeren Bitwerte entsprechen.

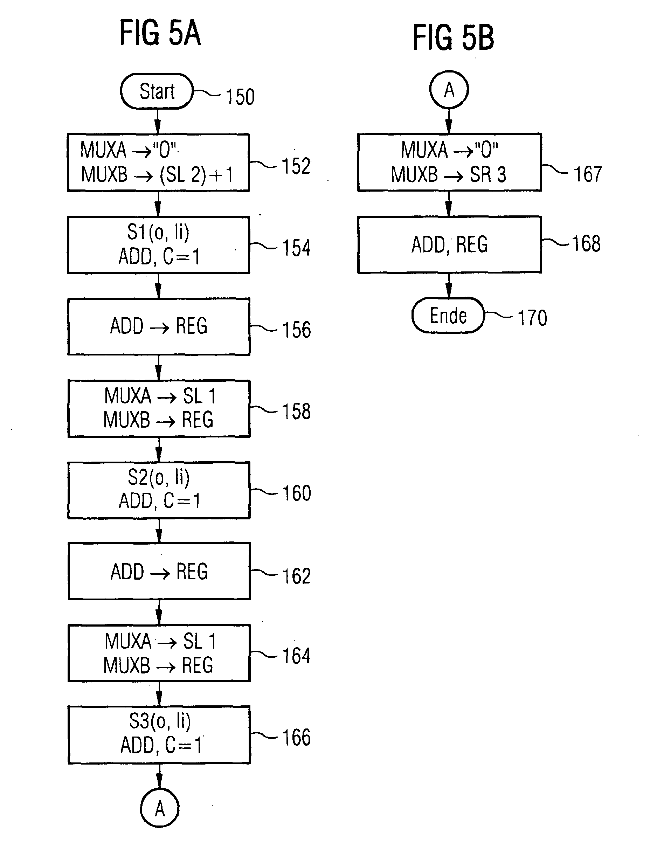

Die Funktion der Schaltungsanordnung 10 wird unten in Zusammenhang mit der Erläuterung der Figuren 5A und 5B näher erläutert. Dabei gewährleistet eine übergeordnete Steuereinheit, dass an dem Eingangs-Bussystem 28 die Eingangsdaten anliegen, die gemäß Standard H.263 "Video coding for low bit rate communication", Anhang F, bei der Berechnung der Formel (1) bzw. (2) erforderlich sind.

Figur 2 zeigt den Aufbau der Verschiebeeinheit 16, die eine einfache Linksverschiebung und damit eine Multiplikation um den Faktor 2 bewirkt. Eine Datenleitung 60 des Eingangs-Bussystems 28 dient zur Übertragung des Bits an der Bitposition 0. Die Datenleitung 60 führt ohne Verzweigungen und ohne zwischengeschaltete Bauelemente durch die Verschiebeeinheit 16 und wird zu einer Datenleitung des Ausgangs-Bussystems 26, die zum Übertragen des Bits an der Bitposition 1 auf diesem Bussystem 26 dient. Eine Datenleitung 62 des Bussystems 28 dient zur Übertragung des Bits an der Bitposition 1. Die Datenleitung 62 führt durch die Verschiebeeinheit 16 hindurch und dient im Ausgangs-Bussystem 26 zur Übertragung des Bits an der Bitposition 2. Durch Punkte angedeutete Datenleitungen 64 des Eingangs-Bussystems 26 dienen zur Übertragung der Bits an den Bitpositionen 2 bis 6. Die Datenleitungen 64 führen ebenfalls durch die Verschiebeeinheit 16 hindurch und bilden Datenleitungen zur Übertragung der Bits an Bitpositionen 3 bis 7 des Ausgangs-Bussystems 26. Eine Datenleitung 66 des Eingangs-Bussystems 28 dient zur Übertragung des Bits an der Bitposition 7. Die Datenleitung 66 führt durch die Verschiebeeinheit 16 hindurch und bildet eine Datenleitung des Bussystems 26, die zur Übertragung des Bits an der Bitposition 8 dient. Die Bitpositionen zeigen durch ihren Wert die Zweierpotenz an, der das auf ihnen übertragene Bit entspricht. So entspricht ein Bit an der Bitposition 8 einem Wert von $2^8$, d.h. von 256.

In der Verschiebeeinheit 16 beginnt eine Datenleitung 68 für die Bitposition 0 des Ausgangs-Bussystems 26. An die Datenleitung 68 wird in der Verschiebeeinheit 16 ein Potential angelegt, das dem Wert 0 entspricht, z.B. ein Potential von 0 Volt bei einer positiven Schaltlogik.

Figur 3 zeigt den Aufbau der Verschiebeeinheit 18, die eine zweifache Linksverschiebung der Bitpositionen des Eingangs-Bussystems 28 im Vergleich zu den Bitpositionen des Ausgangs-Bussystems 34 und damit eine Multiplikation mit dem Faktor 4 bewirkt. Eine Datenleitung 80 des Eingangs-Bussystems 28 dient zur Übertragung des Bits an der Bitposition 0. Die Datenleitung 80 führt durch die Verschiebeeinheit 18 hindurch und dient auf dem Ausgangs-Bussystem 34 zur Übertragung des Bits an der Bitposition 2. Eine Datenleitung 82 des Eingangs-Bussystems 28 dient zur Übertragung des Wertes für die Bitposition 1. Die Datenleitung 82 führt ebenfalls durch die Verschiebeeinheit 18 hindurch und bildet im Ausgangs-Bussystem 34 eine Datenleitung zur Übertragung des Bits an der Bitposition 3. Datenleitungen 84 zur Übertragung der Bits an den Bitpositionen 2 bis 6 auf dem Eingangs-Bussystem 28 sind durch Punkte angedeutet. Die Datenleitungen 84 führen ebenfalls durch die Verschiebeeinheit 18 hindurch und bilden auf dem Ausgangs-Bussystem 34 Datenleitungen zur Übertragung der Bitwerte an den Bitpositionen 4 bis 8. Eine Datenleitung 86 des Eingangs-Bussystems 28 dient zur Übertragung des Wertes an der Bitposition 7. Die Datenleitung 86 führt durch die Verschiebeeinheit 18 hindurch und bildet im Ausgangs-Bussystem 34 eine Datenleitung zur Übertragung des Wertes für die Bitposition 9.

In der Verschiebeeinheit 18 beginnt eine Datenleitung 88 zur Übertragung des Bitwertes der Bitposition 0 des Ausgangs-Bussystems 34. An die Datenleitung 88 wird ein Potential angelegt, das dem Bitwert 1 entspricht, z.B. ein Potential von 5 Volt. Durch dieses Potential wird bewirkt, dass zusätzlich zu der in der Verschiebeeinheit 18 ausgeführten Multiplikation mit dem Faktor 4 noch der Wert Eins addiert wird. Eine Datenleitung 90 beginnt ebenfalls in der Verschiebeeinheit 18 und dient zur Übertragung des Bits an der Bitposition 1 des Ausgangs-Bussystems 34. An die Datenleitung 90 wird in der Verschiebeeinheit 18 ein Potential angelegt, das dem Bitwert 0 entspricht, z.B. ein Potential von 0 Volt.

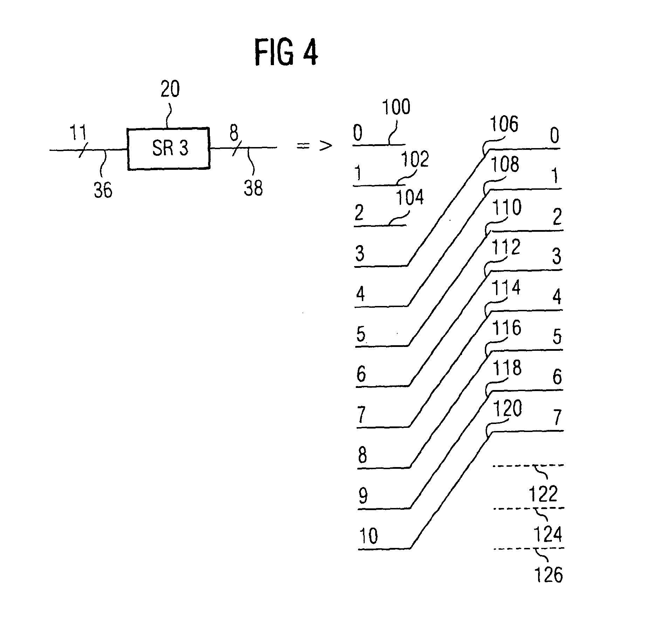

Figur 4 zeigt den Aufbau der Verschiebeeinheit 20, die eine dreifache Rechtsverschiebung der Bitpositionen des Eingangs-Bussystems 36 im Vergleich zu den Bitpositionen des Ausgangs-Bussystems 38 und damit eine ganzzahlige Division durch den Divisor 8 bewirkt. Drei Datenleitungen 100, 102 und 104 des Eingangs-Bussystems 36 enden in der Verschiebeeinheit 20. Die Datenleitungen 100, 102 und 104 dienen im Eingangs-Bussystems 36 in dieser Reihenfolge zur Übertragung der Werte für die Bitpositionen 0, 1 bzw. 2. Datenleitungen 106 bis 120 des Eingangs-Bussystems 36 dienen in der angegebenen Reihenfolge zur Übertragung der Werte für die Bitpositionen 3 bis 10. Die Datenleitungen 106 bis 120 führen durch die Verschiebeeinheit 20 hindurch und bilden in dieser Reihenfolge Datenleitungen des Ausgangs-Bussystems 38 zur Übertragung der Werte an den Bitpositionen 0 bis 7.

Bei einem anderen Ausführungsbeispiel der Verschiebeeinheit 20 gibt es drei weitere Datenleitungen 122, 124 und 126 des Ausgangs-Bussystems 38, die in der Verschiebeeinheit 20 beginnen und Bitwerte für die Bitpositionen 8, 9 und 10 übertragen. Die Datenleitungen 122, 124 und 126 werden in der Verschiebeeinheit 20 beim Rechnen mit natürlichen Zahlen mit einem Potential beschaltet, das dem logischen Bitwert 0 zugeordnet ist, z.B. mit 0 Volt. Beim Rechnen mit vorzeichenbehafteten Zahlen sind die Datenleitungen 122 bis 126 mit dem auf der Datenleitung 120 geführten Potential zu belegen.

Die Figuren 5A und 5B zeigen Verfahrensschritte, die beim Betrieb der Schaltungsanordnung 10 ausgeführt werden, wenn gemäß Formel (1) bzw. (2) der Wert eines Pixels berechnet wird, das in der oberen linken Ecke eines Bezugsblockes liegt, für den eine Decodierung durchgeführt werden soll. Gemäß Standard H.263, Anhang F, Figuren 2, 3 bzw. 4 müssen für dieses Pixel die Wichtungsfaktoren 4, 2 und 2 verwendet werden. Um dies zu erreichen, wird das in den Figuren 5A und 5B dargestellte Verfahren beginnend in einem Verfahrensschritt 150 ausgeführt. In einem folgenden Verfahrensschritt 152 steuert die Steuereinheit den Multiplexer MUXA so an, dass das Null-Bussystem 22 mit dem Summanden-Bussystem 30 verbunden ist. Damit hat der erste Summand den Wert 0. Außerdem wird der Multiplexer MUXB so angesteuert, dass die Verschiebeeinheit 18 wirksam ist, d.h. dass das Ausgangs-Bussystem 34 mit dem Summanden-Bussystem 40 verbunden ist.

In einem Verfahrensschritt 154 wird durch eine Zuordnungseinheit mit Hilfe eines ersten Bewegungsvektors ein Block S1 von 8 mal 8 Pixeln im letzten decodierten Bild ermittelt. Dabei wird von einem dem Bezugsblock entsprechenden Block im letzten decodierten Bild ausgehend der Block S1 ermittelt. "Entsprechend" bedeutet wieder, dass der Block an der gleichen Stelle im letzten decodierten Bild liegt wie der Bezugsblock im zu decodieren Bild. Der 8-Bitwert zur Angabe der Luminanz für das Pixel in der oberen linken Ecke des Blocks S1 wird durch eine Zuordnungseinheit an das Eingangs-Bussystem 28 angelegt. Der Luminanzwert wird in der Verschiebeeinheit 18 mit dem Faktor 4 multipliziert. Außerdem wird in der Verschiebeeinheit 18, wie oben an Hand der Figur 3 erläutert, der Wert 1 addiert. Das Ergebnis gelangt über das Summanden-Bussystem 40 in die Addiereinheit 32. Am Eingangsanschluss C des Addierers wird durch die Steuereinheit ein Wert angelegt, der einen Übertrag anzeigt, um nochmals den Wert 1 zu addieren. Das Ergebnis wird auf dem Ausgangs-Bussystem 42 ausgegeben und gelangt zum Register 14. Durch einen Übernahmebefehl der Steuereinheit wird der berechnete Wert in das Register 14 übernommen, siehe Verfahrensschritt 156.

Um den zweiten Term der Formel (1) bzw. (2) zu berechnen, wählt die Steuereinheit in einem Verfahrensschritt 158 mit Hilfe des Multiplexers MUXA das Ausgangs-Bussystem 26 aus und verbindet es mit dem Summanden-Bussystem 30. Der Multiplexer MUXB wird so angesteuert, dass das Rückkoppel-Bussystem 36 mit dem Summanden-Bussystem 40 verbunden ist.

In einem Verfahrensschritt 160 wird mit Hilfe des zweiten Bewegungsvektors ein Block S2 im letzten decodierten Bild ermittelt. Dabei wird wieder von dem dem Bezugsblock entsprechenden Block im letzten decodierten Bild ausgegangen. Die Zuordnungseinheit liest den Luminanzwert des oberen linken Pixels dieses Blocks S2 und legt den Luminanzwert an das Eingangs-Bussystem 28 an. Der Luminanzwert gelangt zur Verschiebeeinheit 16, wird dort wie oben an Hand der Figur 2 erläutert, faktisch mit dem Faktor 2 multipliziert. Das Ergebnis wird auf dem Ausgangs-Bussystem 26 ausgegeben und gelangt über das Summanden-Bussystem 30 zur Addiereinheit 32. Damit ist der zweite Term der Formel (1) bzw. (2) berechnet. Die Addition zu dem bisher ermittelten Ergebnis erfolgt durch die Übertragung des bisherigen Ergebnisses über das Rückkoppel-Bussystem 36, den Multiplexer MUXB und das Summanden-Bussystem 40 zur Addiereinheit 32. Bei der Addition der an den Summanden-Bussystemen 30 und 40 anliegenden Datenwerte wird durch die Steuereinheit an den Eingangsanschluss C der Addiereinheit 32 ein Wert angelegt, der einen Übertrag anzeigt. Damit wird zusätzlich der Wert 1 addiert. Das Ergebnis der Addition wird wieder auf dem Ausgangs-Bussystem 42 ausgegeben und gelangt somit zum Register 14. Ein Übernahmebefehl der Steuereinheit führt zur Übernahme des zweiten Zwischenergebnisses in das Register 14, vgl. Verfahrensschritt 162.

Zur Berechnung des dritten Terms der Formel (1) bzw. der Formel (2) wird in einem Verfahrensschritt 164 der Multiplexer MUXA durch die Steuereinheit so geschaltet, dass die Verschiebeeinheit 16 weiterhin wirksam ist, d.h. dass das Ausgangs-Bussystem 26 mit dem Summanden-Bussystem 30 verbunden bleibt. Der Multiplexer MUXB wird durch die Steuereinheit so angesteuert, dass das Rückkoppel-Bussystem 36 ebenfalls mit dem Summanden-Bussystem 40 verbunden bleibt. Auch am Eingangsanschluss C bleibt der Wert unverändert.

In einem Verfahrensschritt 166 ermittelt die Zuordnungseinheit mit Hilfe eines dritten Bewegungsvektors einen Block S3 ausgehend von dem dem Bezugsblock entsprechenden Block im letzten decodierten Bild. Es wird der Luminanzwert des Pixels in der oberen linken Ecke des Block S3 gelesen und an das Eingangs-Bussystem 28 angelegt. Der Luminanzwert wird in der Verschiebeeinheit 16 mit dem Faktor 2 multipliziert und in der Addiereinheit 32 zu dem bisher ermittelten Ergebnis addiert. Außerdem wird wieder der Wert Eins addiert.

Durch die dreifache Addition des Wertes 1 mit Hilfe des Anschlusses C und die Addition des Wertes 1 beim Aktivieren der Verschiebeeinheit 18 im ersten Durchlauf wurde insgesamt der Wert 4 addiert, der in den Formeln (1) bzw. (2) innerhalb der Klammer angegeben ist. Um die ganzzahlige Division durch den Divisor 8 durchzuführen, schaltet die Steuereinheit in einem Verfahrensschritt 167 den Multiplexer MUXA so, dass das Null-Bussystem 22 mit dem Summanden-Bussystem 30 verbunden ist. Außerdem wird der Multiplexer MUXB so angesteuert, dass die Verschiebeeinheit 20 aktiviert wird, d.h. dass das Ausgangs-Bussystem 28 mit dem Summanden-Bussystem 40 verbunden ist. In der Verschiebeeinheit 20 wird das bisher ermittelte Ergebnis, das über das Rückkoppel-Bussystem 36 vom Register 14 zur Verschiebeeinheit 20 übertragen wird durch den Wert 8 geteilt. Der durch 8 geteilte Wert gelangt über das Ausgangs-Bussystem 38 und das Summanden-Bussystem 40 zur Addiereinheit 32.

In einem Verfahrensschritt 168 wird die Addition in der Addiereinheit 32 ausgeführt. Der Eingangsanschluss C wird auf einen Wert gesetzt, der keinem Übertrag entspricht. Somit wird der Wert Eins nicht addiert. Aufgrund des Summanden mit dem Wert 0 am Summanden-Bussystem 30 wird das am Bussystem 40 anliegende Datenwort unverändert zum Ausgangs-Bussystem 42 und damit auch zum Register 14 übertragen. Ein Übernahmebefehl bewirkt die Übernahme des Ergebnisses in das Register 14, wo es bis zur weiteren Bearbeitung und Ausgabe auf dem Ergebnis-Bussystem 48 gespeichert bleibt.

Das Verfahren wird anschließend in einem Verfahrensschritt 170 beendet, weil der Wert für ein Pixel gemäß Formel (1) bzw. gemäß Formel (2) ermittelt worden ist.

Bei der Berechnung des Pixelwertes für das rechts neben dem gerade berechneten Pixel liegende Pixel müssen gemäß Standard H.263, Anhang F, Figuren 2, 3 bzw. 4 die Faktoren 5, 2 und 1 eingesetzt werden. Die Berechnung erfolgt wiederum gemäß Formel (1) bzw. (2) so wie oben an Hand der Figuren 5A und 5B erläutert, jedoch wird im ersten Durchlauf zur Multiplikation des Faktors 5 der Multiplexer MUXA so angesteuert, dass das Eingangs-Bussystem 28 mit dem Summanden-Bussystem 30 verbunden ist. Die Verschiebeeinheit 18 bleibt weiterhin aktiv.

Der zweite Durchlauf bleibt unverändert, insbesondere wird die Verschiebeeinheit 16 zur Multiplikation des Faktors 2 aktiviert. Beim dritten Durchlauf wird der Multiplexer MUXA so angesteuert, dass die Verschiebeeinheit 16 nicht aktiv ist. Das Eingangs-Bussystem 28 wird mit dem Summanden-Bussystem 30 verbunden. Außerdem werden durch die Zuordnungseinheiten in den Verfahrensschritten 154, 160 bzw. 166 die Pixel aus dem Block S1, S2 bzw. S3 ausgewählt, die jeweils rechts neben den oberen linken Pixeln liegen.

Werden Pixelwerte für Pixel berechnet, die im mittleren Bereich des Bezugsblocks liegen, so müssen gemäß Standard H.263, Anhang F, Figur 2, Faktoren mit dem Wert 6 eingesetzt werden. Eine Multiplikation mit dem Faktor 6 wird ausgeführt, indem der Multiplexer MUXA im ersten Durchlauf so angesteuert wird, dass die Verschiebeeinheit 16 aktiv ist. Außerdem wird der Multiplexer MUXB im ersten Durchlauf so angesteuert, dass die Verschiebeeinheit 18 aktiv ist. Die Verschiebeeinheit 16 bewirkt eine Multiplikation mit dem Faktor 2. Die Verschiebeeinheit 18 bewirkt eine Multiplikation mit dem Faktor 4. Die Ergebnisse der Multiplikationen werden in der Addiereinheit 32 addiert, so dass sich insgesamt eine Multiplikation mit dem Faktor 6 ergibt.

Bei einem anderen Ausführungsbeispiel wird die Schaltungsanordnung 10 zur Durchführung anderer Filteroperationen der Bildverarbeitung eingesetzt. Dabei werden auch Verschiebeeinheiten eingesetzt, die Verschiebungen der Zuordnung der Bitpositionen um andere Werte als die an Hand der Figuren 1 bis 5B erläuterten Verschiebeeinheiten 16, 18 und 20 ausführen. Die Verschiebeeinheiten verschieben jeweils um Potenzen zur Basis 2 nach links oder nach rechts. Durch die Verwendung des Addierers lassen sich Faktoren mit allen ganzzahligen Werten erzeugen.

Bei einem nächsten Ausführungsbeispiel wird in der Verschiebeeinheit 18 der Wert 2 addiert, indem an die Datenleitung 90 ein Potential angelegt wird, das dem Bitwert 1 entspricht. An die Datenleitung 88 wird ein Potential angelegt, das dem Bitwert 0 entspricht. Um eine zusätzliche Addition mit dem Wert 4 zu bewirken, muss bei diesem Ausführungsbeispiel nach dem Aktivieren der Verschiebeeinheit 18 und der damit verbundenen Addition des Wertes 2 nur noch in zwei Durchläufen von der Steuereinheit an den Eingangsanschluss C ein Wert angelegt werden, der einen Übertrag anzeigt.

Die Schaltungsanordnung 10 lässt sich im Rahmen der Encodierung in einem Encoder und auch im Rahmen einer Decodierung in einem Decoder einsetzten. Der Encoder führt im Rahmen der Encodierung auch eine Decodierung aus, siehe beispielsweise Standard H.263 der ITU-T. Der Encoder ist Bestandteil einer Sendeeinheit zum Senden von Bilddaten. Der Decoder ist Bestandteil einer Empfangseinheit zum Empfangen von Bilddaten. In einem Mobilbildtelefon oder in einem Festnetz-Bildtelefon sind eine Sendeeinheit und eine Empfangseinheit enthalten. Es werden Empfangseinheiten und Sendeeinheiten verwendet, die jeweils eine Schaltungsanordnung 10 enthalten. Alternativ wird eine einzige Schaltungsanordnung 10 auch zeitversetzt sowohl zur Erbringung von Funktionen der Empfangseinheit als auch zur Erbringung von Funktionen der Sendeeinheit eingesetzt.

**Patentansprüche**

1. Schaltungsanordnung (10) zum Ausführen einer Multiplikation und/oder einer Filteroperation,
   mit mindestens einer eingangsseitig mit einem Eingangsbussystem (28) verbundenen Verschiebeeinheit (16), die auf dem Eingangsbussystem (28) anliegende Daten unter Beibehaltung der Bitfolge und der Datenwerte auf einem Ausgangsbussystem (26) mit einer von der Zuordnung der Daten des Eingangsbussystems (28) zu Potenzen einer Basis verschiedenen Zuordnung der Daten zu den Potenzen der Basis ausgibt,
   **gekennzeichnet durch** eine Addiereinheit (32), die über mindestens zwei Summanden-Bussysteme (30, 40) übertragene Daten addiert,
   **durch** mindestens eine Multiplexeinheit (MUXA), die wahlweise eine von mindestens zwei ihrer Eingangsanschlussgruppen mit ihren Ausgangsanschlüssen verbindet und deren Ausgangsanschlüsse mit einem Summanden-Bussystem (30) verbunden sind,
   **durch** eine Verbindung des Ausgangsbussystems (26) der Verschiebeeinheit (16) mit einer Gruppe von Eingangsanschlüssen der Multiplexeinheit (MUXA),
   **durch** mindestens eine direkte Verbindung und/oder mindestens eine indirekte Verbindung unter Zwischenschaltung einer Verschiebeeinheit zwischen dem Eingangsbussystem (28) und einer anderen Eingangsanschlussgruppe der Multiplexeinheit (MUXA),
   und **durch** eine Steuereinheit, welche die Multiplexeinheit (MUXA) gemäß einem benötigen Faktor ansteuert.

2. Schaltungsanordnung (10) nach Anspruch 1, **gekennzeichnet durch** mindestens eine weitere von der Steuereinheit gesteuerte Multiplexeinheit (MUXB), deren Ausgangsanschlüsse mit dem anderen Summandendatenbus (40) verbunden sind,
   und **durch** mindestens eine eingangsseitig mit dem Eingangsbussystem (28) verbundene weitere Verschiebeeinheit (18, 20), mit vorzugsweise von der anderen Verschiebeeinheit (16) abweichendem Aufbau, deren Ausgangsbussystem (34, 38) mit einer Gruppe von Eingangsanschlüssen der weiteren Multiplexeinheit (MUXB) verbunden ist.

3. Schaltungsanordnung (10) nach Anspruch 1 oder 2, **dadurch gekennzeichnet, dass** die Leitungen (60) des Eingangsbussystems (28) einer Verschiebeeinheit (16, 18) mit Leitungen (60) des Ausgangsbussystems (26) derselben Verschiebeeinheit (16, 18) direkt verbunden sind,
   und dass an mindestens eine Leitung (68) des Ausgangsbussystems (26) der Verschiebeeinheit (16) in der Verschiebeeinheit (16) ein vorgegebenes Potential (L) angelegt wird.

4. Schaltungsanordnung nach Anspruch 3, **dadurch gekennzeichnet, dass** das vorgegebene Potential (H) einen Wert hat, der zu einer zusätzlichen Addition führt.

5. Schaltungsanordnung (10) nach einem Anspruche 1 oder 2, **dadurch gekennzeichnet, dass** ein Teil der Leitungen (106 bis 120) des Eingangsbussystems (36) einer Verschiebeeinheit (20) mit Leitungen (106 bis 120) des Ausgangsbussystems (38) derselben Verschiebeeinheit (20) direkt verbunden sind,
   und dass mindestens eine Leitung (100 bis 104) des Eingangsbussystems (36) der Verschiebeeinheit (20) nicht durch die Verschiebeeinheit (20) geführt wird und/oder in der Verschiebeeinheit (20) endet.

6. Schaltungsanordnung (10) nach einem der vorhergehenden Ansprüche, **gekennzeichnet durch** eine der Addiereinheit (32) nachgeschaltete Speichereinheit (14), die eine **durch** die Addiereinheit (32) berechnete Summe speichert,
   und **durch** ein Rückkoppel-Bussystem (36), das von den Ausgangsanschlüssen der Speichereinheit (14) zu einer Eingangsanschlussgruppe einer Multiplexeinheit (MUXB) oder zu dem anderen Summanden-Bussystem (40) führt.

7. Verwendung einer Schaltungsanordnung nach einem der vorhergehenden Ansprüche zum Ausführen einer Filteroperation für das Bearbeiten von Bilddaten, vorzugsweise zum Ausführen der Filteroperation im Rahmen einer sogenannten "Overlapped Block Motion Compensation", insbesondere gemäß Standard H.263, Anhang F, oder gemäß einem auf diesem Standard aufbauenden Standard.

8. Bildtelefon, **dadurch gekennzeichnet, dass** es eine Schaltungsanordnung (10) nach einem der vorhergehenden Ansprüche enthält.

9. Verschiebeeinheit (16 bis 20),
mit einem Eingangsbussystem (28),
mit einem Ausgangsbussystem (26),
und mit einer Verschiebefunktion, die auf dem Eingangsbussystem (28) anliegende Daten unter Beibehaltung der Bitfolge und der Datenwerte auf einem Ausgangsbussystem (26) mit einer von der Zuordnung der Daten des Eingangsbussystems (28) zu Potenzen einer Basis verschiedenen Zuordnung der Daten zu den Potenzen der Basis ausgibt,
**dadurch gekennzeichnet, dass** zum Erbringen der Verschiebefunktion die Leitungen (60) des Eingangsbussystems (28) der Verschiebeeinheit (16, 18) mit Leitungen (60) des Ausgangsbussystems (26) direkt verbunden sind, und dass an mindestens eine Leitung (68) des Ausgangsbussystems (26) in der Verschiebeeinheit (16) ein vorgegebenes Potential (L) angelegt wird,
oder dass zum Erbringen der Verschiebefunktion ein Teil der Leitungen (106 bis 120) des Eingangsbussystems (36) der Verschiebeeinheit (20) mit Leitungen (106 bis 120) des Ausgangsbussystems (38) direkt verbunden sind, und dass bei einer Verbindung nur eines Teils der Leitungen (106 bis 120) mindestens eine Leitung des Eingangsbussystems (100 bis 104) nicht durch die Verschiebeeinheit (20) geführt wird und /oder in der Verschiebeeinheit (20) endet.

10. Steuereinheit, **dadurch gekennzeichnet, dass** die Steuereinheit so aufgebaut ist, dass bei ihrem Betrieb die Multiplexeinheit (MUXA) einer Schaltungsanordnung (10) nach einem der vorhergehenden Ansprüche angesteuert wird,
oder dass bei ihrem Betrieb die Multiplexeinheiten (MUXA, MUXB) einer Schaltungsanordnung (10) nach einem der vorhergehenden Ansprüche angesteuert werden.

11. Programm, insbesondere für eine Steuereinheit nach Anspruch 10, mit einer Befehlsfolge, bei deren Ausführung durch einen Prozessor die Multiplexeinheit (MUXA) einer Schaltungsanordnung (10) nach einem der Ansprüche 1 bis 9 angesteuert wird,
oder bei deren Ausführung durch einen Prozessor die Multiplexeinheiten (MUXA, MUXB) einer Schaltungsanordnung (10) nach einem der Ansprüche 1 bis 9 angesteuert werden.

FIG 1

EP 1 220 087 A1

## FIG 2

## FIG 3

# FIG 4

## FIG 5A

Start — 150

MUXA → "0"
MUXB → (SL 2) + 1 — 152

S1(o, li)
ADD, C = 1 — 154

ADD → REG — 156

MUXA → SL 1
MUXB → REG — 158

S2(o, li)
ADD, C = 1 — 160

ADD → REG — 162

MUXA → SL 1
MUXB → REG — 164

S3(o, li)
ADD, C = 1 — 166

A

## FIG 5B

A

MUXA → "0"
MUXB → SR 3 — 167

ADD, REG — 168

Ende — 170

Europäisches
Patentamt

**EUROPÄISCHER RECHERCHENBERICHT**

Nummer der Anmeldung

EP 00 12 8652

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | JP 11 066045 A (OKI ELECTRIC IND CO LTD) 9. März 1999 (1999-03-09) | 1,2,10 | G06F7/544 H04N7/50 |
| Y | * Zusammenfassung * | 3-9,11 | H04N7/36 |
| Y | US 5 001 663 A (PARULSKI KENNETH A  ET AL) 19. März 1991 (1991-03-19) * Zusammenfassung; Abbildungen 2,3 * * Spalte 1, Zeile 1 - Spalte 2, Zeile 12 * | 3-5,7-9 | |
| Y | US 5 847 981 A (KELLEY BRIAN TODD  ET AL) 8. Dezember 1998 (1998-12-08) * Spalte 1, Zeile 1 - Spalte 1, Zeile 18; Abbildungen 1-8 * | 6 | |
| Y | EP 0 615 199 A (INTEGRATED INFORMATION TECH) 14. September 1994 (1994-09-14) * Seite 3, Zeile 1 - Seite 3, Zeile 32 * * Seite 5, Zeile 1 - Seite 5, Zeile 16 * * Abbildungen 4A,4B * | 11 | |
| A | US 5 402 369 A (MAIN DAVID R) 28. März 1995 (1995-03-28) * das ganze Dokument * | 1-11 | RECHERCHIERTE SACHGEBIETE (Int.Cl.7) G06F H04N |
| A | US 4 967 388 A (TATE LARRY R) 30. Oktober 1990 (1990-10-30) * das ganze Dokument * | 1-11 | G06T |

Der vorliegende Recherchenbericht wurde für alle Patentansprüche erstellt

| Recherchenort | Abschlußdatum der Recherche | Prüfer |
|---|---|---|
| MÜNCHEN | 23. März 2001 | Pfab, S |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
  Dokument

EPO FORM 1503 03 82 (P04C03)

**EP 1 220 087 A1**

**ANHANG ZUM EUROPÄISCHEN RECHERCHENBERICHT
ÜBER DIE EUROPÄISCHE PATENTANMELDUNG NR.**    EP 00 12 8652

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-03-2001

| Im Recherchenbericht angeführtes Patentdokument | Datum der Veröffentlichung | Mitglied(er) der Patentfamilie | Datum der Veröffentlichung |
|---|---|---|---|
| JP 11066045 A | 09-03-1999 | KEINE | |
| US 5001663 A | 19-03-1991 | DE 69021164 D<br>DE 69021164 T<br>EP 0424506 A<br>JP 3506088 T<br>WO 9013866 A | 31-08-1995<br>11-04-1996<br>02-05-1991<br>26-12-1991<br>15-11-1990 |
| US 5847981 A | 08-12-1998 | KEINE | |
| EP 0615199 A | 14-09-1994 | CA 2091539 A<br>DE 615199 T | 12-09-1994<br>24-08-1995 |
| US 5402369 A | 28-03-1995 | AU 7216394 A<br>WO 9502215 A | 06-02-1995<br>19-01-1995 |
| US 4967388 A | 30-10-1990 | WO 8808567 A | 03-11-1988 |

EPO FORM P0461